# EUROPEAN PATENT SPECIFICATION

(11) **EP 2 855 859 B1**
(45) Date of publication and mention of the grant of the patent: **30.01.2019**
(21) Application number: 13830287.2
(22) Date of filing: 20.05.2013
(51) Int. Cl.: F01D 25/18, F02C 7/06

(54) **DIRECT FEED AUXILIARY OIL SYSTEM FOR GEARED TURBOFAN ENGINE**
DIREKTFLUSS-HILFSÖLSYSTEM FÜR GETRIEBETURBOLÜFTER
SYSTÈME D'ALIMENTATION DIRECTE EN HUILE AUXILIAIRE POUR TURBORÉACTEUR À DOUBLE FLUX À RÉDUCTEUR

(30) Priority: 31.05.2012 US 201213484698
(43) Date of publication of application: 08.04.2015
(73) Proprietor: United Technologies Corporation, Farmington, CT 06032 (US)
(72) Inventor: PARNIN, Francis, Suffield, Connecticut 06078 (US); DOLMAN, Paul H., Simsbury, Connecticut 06070 (US)
(74) Representative: Dehns
(86) International application number: PCT/US2013/041769
(87) International publication number: WO 2014/031194

(56) References cited:
- EP-A1- 2 351 950
- EP-A2- 2 166 196
- EP-A2- 2 166 196
- EP-A2- 2 253 805
- US-A1- 2005 135 929
- US-A1- 2010 212 281
- US-A1- 2011 108 360
- US-B2- 8 020 665

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

The high pressure turbine drives the high pressure compressor through an outer shaft to form a high spool, and the low pressure turbine drives the low pressure compressor through an inner shaft to form a low spool. An epicyclical gear assembly may be utilized to drive the fan section such that the fan section may rotate at a speed different than the turbine section so as to increase the overall propulsive efficiency of the engine.

Lubrication of the gear assembly is normally provided by a main lubrication system. An auxiliary lubrication system is further provided to maintain a supply of lubricant should the main lubrication system temporarily not provide a sufficient supply of lubricant such as in low or reduced-G operating conditions.

Accordingly, it is desirable to design and develop improved auxiliary lubrication systems that operate in concert with the main lubricant system to maintain lubricant flow to the geared architecture.

EP 2253805 A1 discloses a prior art lubrication system.

### SUMMARY

According to the present invention, there is provided a lubrication system as set forth in claim 1.

An embodiment of the foregoing lubrication system includes a collection channel disposed at least partially about the gear system and in communication with the inlet passage for directing lubricant to the inlet of the auxiliary pump.

A further embodiment of any of the foregoing lubrication systems includes a valve for directing lubricant between the bearing passage and a main lubricant supply responsive to a condition within a main lubricant system.

In a further embodiment of any of the foregoing lubrication systems, the reservoir includes a first reservoir disposed between the auxiliary pump and the valve and a second reservoir disposed between the valve and the bearing passage.

A further embodiment of any of the foregoing lubrication systems includes a bypass in communication with the inlet passage, the bypass including a plurality of openings for draining lubricant.

In a further embodiment of any of the foregoing lubrication systems, the reservoir comprises a volume determined to hold a quantity of lubricant required for operation of the fan drive gear system for a desired time.

In a further embodiment of any of the foregoing lubrication systems, the gear system comprises a fan drive gear system.

According to the present invention, there is provided a fan drive gear system as set forth in claim 9.

An embodiment of the foregoing fan drive gear system includes a journal bearing supporting rotation of each of the plurality of intermediate gears, and the bearing passage is in communication with each of the journal bearings.

A further embodiment of any of the foregoing fan drive gear systems includes a valve for directing lubricant between the bearing passage and a main supply responsive to a condition within main lubrication system.

In a further embodiment of any of the foregoing fan drive gear systems, the reservoir includes a first reservoir disposed between the auxiliary pump and the valve and a second reservoir disposed between the valve and the journal bearings.

An embodiment of any of the foregoing fan drive gear systems includes a bypass in communication with the collection channel.

In an embodiment of any of the foregoing fan drive gear, the reservoir comprises a volume determined to hold a quantity of lubricant required for operation of the fan drive gear system for a desired time.

According to the present invention, there is provided a gas turbine engine as set forth in claim 4.

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example gas turbine engine.
Figure 2 is a cross section of an example fan drive gear system.
Figure 3 is a schematic representation of an example lubrication system.
Figure 4 is a schematic representation of an example auxiliary lubrication system.

### DETAILED DESCRIPTION

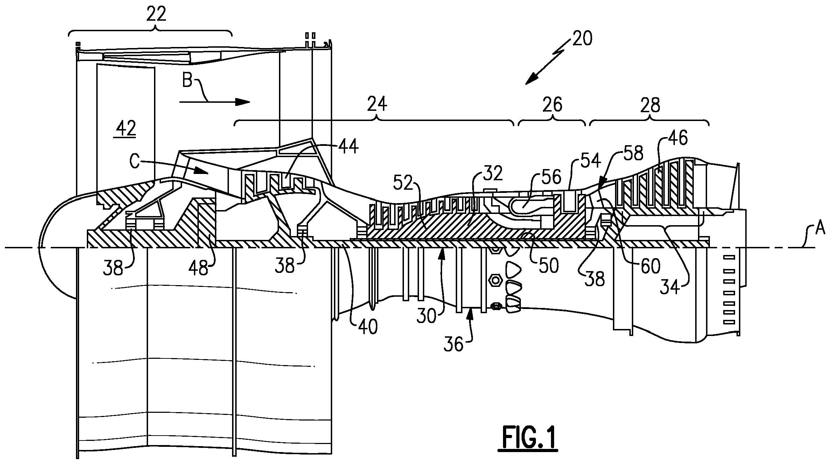

Figure 1 schematically illustrates an example gas turbine engine 20 that includes a fan section 22, a compressor section 24, a combustor section 26 and a turbine section 28. Alternative engines might include an augmenter section (not shown) among other systems or features. The fan section 22 drives air along a bypass flow path B while the compressor section 24 draws air in along a core flow path C where air is compressed and communicated to a combustor section 26. In the combustor section 26, air is mixed with fuel and ignited to generate a high pressure exhaust gas stream that expands through the turbine section 28 where energy is extracted and utilized to drive the fan section 22 and the compressor section 24.

Although the disclosed non-limiting embodiment depicts a turbofan gas turbine engine, it should be understood that the concepts described herein are not limited to use with turbofans as the teachings may be applied to other types of turbine engines; for example a turbine engine including a three-spool architecture in which three spools concentrically rotate about a common axis and where a low spool enables a low pressure turbine to drive a fan via a gearbox or fan drive gear system, an intermediate spool that enables an intermediate pressure turbine to drive a first compressor of the compressor section, and a high spool that enables a high pressure turbine to drive a high pressure compressor of the compressor section.

The example engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that connects a fan 42 and a low pressure (or first) compressor section 44 to a low pressure (or first) turbine section 46. The inner shaft 40 drives the fan 42 through a speed change device, such as a geared architecture also referred to as a fan drive gear system 48, to drive the fan 42 at a lower speed than the low speed spool 30. The high-speed spool 32 includes an outer shaft 50 that interconnects a high pressure (or second) compressor section 52 and a high pressure (or second) turbine section 54. The inner shaft 40 and the outer shaft 50 are concentric and rotate via the bearing systems 38 about the engine central longitudinal axis A.

A combustor 56 is arranged between the high pressure compressor 52 and the high pressure turbine 54. In one example, the high pressure turbine 54 includes at least two stages to provide a double stage high pressure turbine 54. In another example, the high pressure turbine 54 includes only a single stage. As used herein, a "high pressure" compressor or turbine experiences a higher pressure than a corresponding "low pressure" compressor or turbine.

The example low pressure turbine 46 has a pressure ratio that is greater than about 5. The pressure ratio of the example low pressure turbine 46 is measured prior to an inlet of the low pressure turbine 46 as related to the pressure measured at the outlet of the low pressure turbine 46 prior to an exhaust nozzle.

A mid-turbine frame 58 of the engine static structure 36 is arranged generally between the high pressure turbine 54 and the low pressure turbine 46. The mid-turbine frame 58 further supports bearing systems 38 in the turbine section 28 as well as setting airflow entering the low pressure turbine 46.

The core airflow C is compressed by the low pressure compressor 44 then by the high pressure compressor 52 mixed with fuel and ignited in the combustor 56 to produce high speed exhaust gases that are then expanded through the high pressure turbine 54 and low pressure turbine 46. The mid-turbine frame 58 includes vanes 60, which are in the core airflow path and function as an inlet guide vane for the low pressure turbine 46. Utilizing the vane 60 of the mid-turbine frame 58 as the inlet guide vane for low pressure turbine 46 decreases the length of the low pressure turbine 46 without increasing the axial length of the mid-turbine frame 58. Reducing or eliminating the number of vanes in the low pressure turbine 46 shortens the axial length of the turbine section 28. Thus, the compactness of the gas turbine engine 20 is increased and a higher power density may be achieved.

The disclosed gas turbine engine 20 in one example is a high-bypass geared aircraft engine. In a further example, the gas turbine engine 20 includes a bypass ratio greater than about six (6), with an example embodiment being greater than about ten (10). The example fan drive gear system 48 is an epicyclical gear train, such as a planetary gear system, star gear system or other known gear system, with a gear reduction ratio of greater than about 2.3.

In one disclosed embodiment, the gas turbine engine 20 includes a bypass ratio greater than about ten (10:1) and the fan diameter is significantly larger than an outer diameter of the low pressure compressor 44. It should be understood, however, that the above parameters are only exemplary of one embodiment of a gas turbine engine including a geared architecture and that the present disclosure is applicable to other gas turbine engines.

A significant amount of thrust is provided by the bypass flow B due to the high bypass ratio. The fan section 22 of the engine 20 is designed for a particular flight condition -- typically cruise at about 0.8 Mach and about 35,000 feet. The flight condition of 0.8 Mach and 35,000 ft., with the engine at its best fuel consumption - also known as "bucket cruise Thrust Specific Fuel Consumption ('TSFC')" - is the industry standard parameter of pound-mass (lbm) of fuel per hour being burned divided by pound-force (Ibf) of thrust the engine produces at that minimum point.

"Low fan pressure ratio" is the pressure ratio across the fan blade alone, without a Fan Exit Guide Vane ("FEGV") system. The low fan pressure ratio as disclosed herein according to one non-limiting embodiment is less than about 1.50. In another non-limiting embodiment the low fan pressure ratio is less than about 1.45.

"Low corrected fan tip speed" is the actual fan tip speed in ft/sec divided by an industry standard temperature correction of [(Tram °R) / 518.7) ^{0.5}]. The "Low corrected fan tip speed", as disclosed herein according to one non-limiting embodiment, is less than about 1150 ft/second.

The example gas turbine engine includes the fan 42 that comprises in one non-limiting embodiment less than about 26 fan blades. In another non-limiting embodiment, the fan section 22 includes less than about 20 fan blades. Moreover, in one disclosed embodiment the low pressure turbine 46 includes no more than about 6 turbine rotors schematically indicated at 34. In another non-limiting example embodiment the low pressure turbine 46 includes about 3 turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

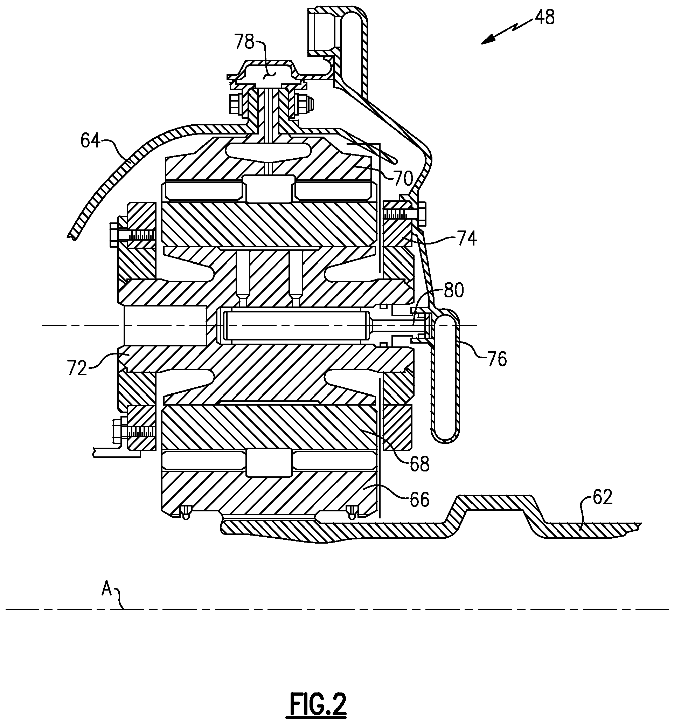

Referring to Figure 2 with continued reference to Figure 1, the example fan drive gear system 48 comprises an epicyclical gear box that includes a sun gear 66 that is attached to a connector shaft 62. The sun gear 66 is engaged to drive intermediate gears 68 that are in turn intermeshed with a ring gear 70. The intermediate gears 68 are supported for rotation on journal bearings 72. The journal bearings 72 are in turn supported by a carrier 74.

In this example, the fan drive gear system 48 comprises a star gear system where the carrier 74 remains fixed such that the intermediate gears 68 are driven by the sun gear 66 but remain in a specific location as is fixed by the carrier 74. The ring gear 70 is driven for rotation about the intermediate gears 68 to drive a fan shaft 64. The fan shaft 64 extends forward of the fan drive gear system 48 to drive the fan section 22.

As appreciated, although a star gear system is disclosed; other gear systems such as a planetary gear system are within the contemplation of this disclosure. In a planetary gear system, the carrier is mounted for rotation such that the intermediate gears 68 rotate about the sun gear 66 and the ring gear 70 is fixed.

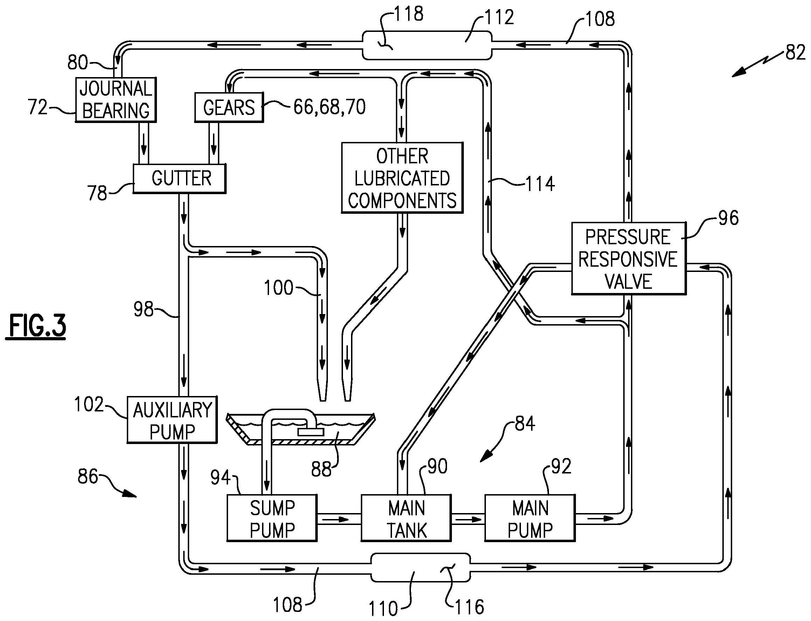

A lubrication system 82 (Figure 3) provides lubricant to the geared fan drive gear system 48. In this example, a lubricant manifold 76 (Figure 2) is mounted to the fan drive gear system 48 to provide lubricant to the journal bearings 72. Lubricant expelled from the fan drive gear system 48 during operation is captured by a gutter 78. The gutter 78 is circumscribed about an outer periphery of the ring gear 70.

In this specification, the term oil and lubricant are utilized to describe a fluid that supplied to the journal bearings and gears to provide both desired lubricity along with heat removal. Any oil or lubricant could be utilized with the example system and are within the contemplation of this disclosure.

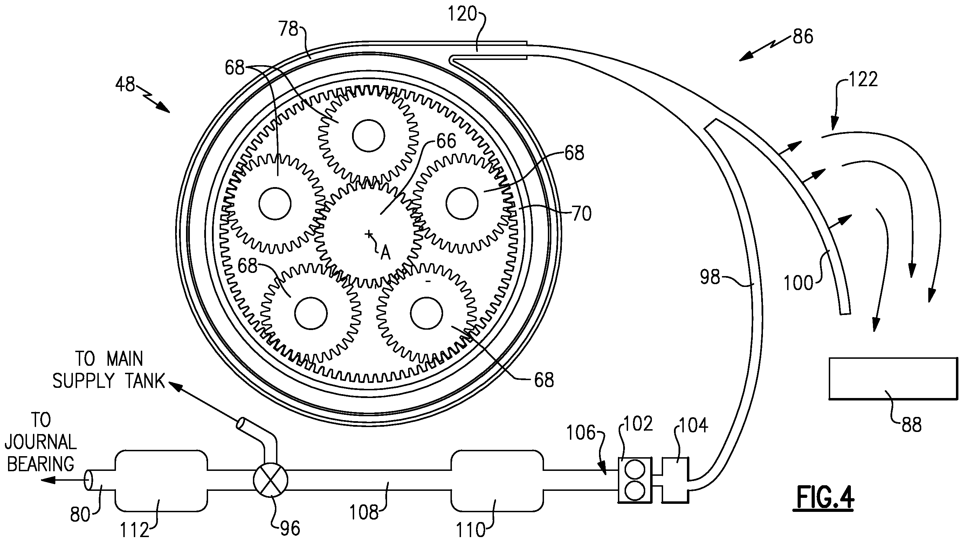

Referring to Figures 3 and 4 with continued reference to Figure 2, the example fan drive gear system 48 is supplied with lubricant by the lubrication system 82. The example lubrication system 82 comprises a main system 84 and an auxiliary system 86. The main system 84 includes a main tank 90 and a main pump 92 that pumps lubricant through a main passage 114 to the gears 66, 68, 70 and journal bearings 72. During normal operation, the main system 84 supplies lubricant of sufficient volume to the gears 66, 68, 70 and journal pin 72 to remove heat from the fan drive gear system 48 and to provide sufficient lubricant to maintain a desired operability of the gears and journal bearings.

The example auxiliary system 86 provides lubricant to the gears 66, 68, 70 and journal bearings 72 during interruption in lubricant supplied by the main system 84. The auxiliary system 86 collects oil that is accumulated in the gutters 78 and supplies that oil to an inlet 104 of auxiliary pump 102. The auxiliary pump 102 pumps lubricant through auxiliary passage 108 that is in communication with bearing passage 80 that supplies lubricant to the journal bearing 72. The auxiliary pump 102 utilizes lubricant obtained from the gutter 78 to supply a sufficient amount of lubricant to the inlet 104 of the auxiliary pump 102 such that it remains sufficiently primed.

An inlet passage 98 is in communication with the gutter 78 through a port 120. Lubricant that is flung radially outward from the fan drive gear system 48 is captured within the gutter 78 and communicated through the port 120 to the inlet passage 98 then on to the auxiliary pump 102. The amount of lubricant captured during normal operation of the fan drive gear system 48 exceeds the capacity of the inlet passage 98 and therefore a bypass 100 is provided in communication with the inlet 98. Lubricant overflows from the inlet passage 108 into the bypass 100 where it is directed through openings 122 to a sump 88 or a bearing compartment. A sump pump 94 may be included to pump lubricant to the main tank 90.

The example auxiliary lubricant system 86 includes reservoirs 110 and 112 that maintain a sufficient amount of lubricant within the auxiliary passage 108 to sustain operation of the fan drive gear system 48 for a brief period during intermittent interruptions in operation of the main lubricant system 84. The example first and second reservoirs 110 and 112 are disposed after the auxiliary pump 102 and are continually charged or filled with lubricant. The example first reservoir 110 is disposed between the outlet 106 of the auxiliary pump 102 and the pressure responsive valve 96. The second reservoir 112 is disposed between the pressure responsive valve 96 and the bearing passage 80.

Because lubricant is stored within the reservoirs 110, 112, the auxiliary system 86 includes a sufficient amount of lubricant to compensate for intermittent interruptions of oil flow from the main lubricant system 84.

A volume 116, 118 of each of the reservoirs 110, 112, provides for the storage of lubricant in a quantity determined to continue lubricant flow to the journal bearings 72 for a desired time. The volumes 116, 118 are greater than a comparable volume within the auxiliary passages 108. In other words, the reservoir 110, 112 include a volume over a fixed length greater than a volume of the auxiliary passage 108 over a length equal to that of the reservoir 110, 112. As appreciated, although the disclosed example includes two reservoirs 110, 112 located in different points along the auxiliary passage 108, any number of reservoirs could be located within the auxiliary passage 108 to store and provide lubricant when required.

A pressure responsive valve 96 is provided in the auxiliary passage 108 that directs lubricant flow responsive to a condition in the main lubricant system 84. In the disclosed example, the valve 96 is responsive to a pressure within the main lubricant passage 114. When pressure is at a desired level indicative of normal operation, the valve 96 directs lubricant flow from the auxiliary passage 108 back to the main tank 90, or some other lubricant supply location. However, in response to a drop in pressure within the main lubricant system 84 and passage 114, the valve 96 will direct lubricant flow to the bearing passage 80 and to the journal bearings 72.

The example auxiliary system 86 supplies lubricant to the journal bearings 72 only, as the journal bearings 72 have limited capacity for operation without lubricant. However, it is within the contemplation of this disclosure that the auxiliary system 86 could direct lubricant to any structure or assembly determined to require lubricant during periods of interruption of main lubricant flow.

During normal operation, the main lubricant system will provide lubricant to journal bearings 72 and to the gears 66, 68, 70. The auxiliary lubricant system 86 operates by gathering lubricant expelled radially outward with the gutter 78. From the gutter 78, lubricant is communicated through the port 120 to the inlet passage 98. The inlet passage 98 fills with lubricant to maintain a pressure and supply of lubricant at the pump inlet 104. Excess lubricant is directed into the bypass 100 and out through openings 122 to the sump 88 or bearing compartment. The pump 102 pumps lubricant through the outlet 106 into the auxiliary passage 108. Reservoirs 110 and 112 are filled with lubricant and maintained by a continual flow from the pump 102. The valve 96 directs lubricant flow back to the main tank 90 for use by the main lubricant system 84.

During interim periods of interruption caused by aircraft maneuvers or conditions such as low, zero or negative G maneuvers, lubricant may not flow as desired from the main lubricant system 84. Accordingly, a pressure within the main passage 114 drops causing actuation of the valve 96 to direct oil from the auxiliary passage 108 to the bearing passage 80 and finally to the journal bearings 72.

The gutter 78 does not recover all of the lubricant communicated to the journal bearings 72 and gears 66, 68, 70, and therefore some lubricant is lost in each pass through the auxiliary system 86. Accordingly, the reservoirs 110 and 112 store additional lubricant to extend the duration that the auxiliary lubrication system 86 can maintain a desired supply to the journal bearings 72.

The example auxiliary lubricant system includes reservoirs that are downstream of the auxiliary pump to provide and push the lubricant in a volume sufficient to maintain operation of the fan drive gear system for an extended amount of time. Moreover, the example auxiliary lubrication system includes a gutter fed auxiliary pump that is charged with lubricant from lubricant normally expelled from the fan drive gear system.

## Claims

1. A lubrication system (82) for a gear system (48) comprising:
an inlet passage (98);
a main pump (92) receiving lubricant from a main tank (90);
an auxiliary pump (102) including an inlet (104) receiving lubricant from the inlet (98) passage and an outlet (106) in communication with an auxiliary passage (108);
a bearing passage (80) in communication with the auxiliary passage (108) for communicating lubricant to a bearing (72) of the gear system (48); and **characterized by**
a reservoir (110, 112) disposed within the auxiliary passage (108) after the outlet (106) of the auxiliary pump (102) and before the bearing passage (80), wherein the reservoir (110, 112) comprises a volume over a fixed length greater than a volume of the auxiliary passage (108) over a length equal to that of the reservoir (110, 112).

2. The lubrication system (82) as recited in claim 1, including a bypass (100) in communication with the inlet passage (98), the bypass (100) including a plurality of openings (122) for draining lubricant.

3. The lubrication system (82) as recited in claim 1 or 2, wherein the gear system comprises a fan drive gear system (48).

4. A gas turbine engine (20) comprising:
a fan (22) including a plurality of fan blades (42) rotatable about an axis (A);
a compressor section (24);
a combustor (26) in fluid communication with the compressor section (24);
a turbine section (28) in fluid communication with the combustor (26);
a geared architecture (48) driven by the turbine section (28) for rotating the fan (22) about the axis (A); and
a lubricant supply system (82) for supplying lubricant including:
a main pump (92) receiving lubricant from a main tank (90);
an auxiliary pump (102) including an inlet (104) receiving lubricant expelled from the geared architecture (48) and an outlet (106) in communication with an auxiliary passage (108);
a bearing passage (80) in communication with the auxiliary passage (108) for communicating lubricant to a journal bearing (72) **characterized by**
a reservoir (110, 112) disposed within the auxiliary passage (108) after the outlet (106) of the auxiliary pump (102) and before the bearing passage (80),
wherein the reservoir (110,112) comprises a volume over a fixed length greater than a volume of the auxiliary passage (108) over a length equal to that of the reservoir (110,112).

5. The gas turbine engine (20) or lubrication system (82) as recited in any preceding claim, including a collection channel (78) disposed about the geared architecture or gear system (48) with the inlet of the auxiliary pump (102) or the inlet passage (98) in communication with the collection channel (78).

6. The gas turbine engine (20) or lubrication system (82) as recited in any preceding claim, including a valve (96) for directing lubricant between the bearing passage (80) and a lubricant supply or a main lubricant supply.

7. The gas turbine engine (20) or lubrication system (82) as recited in claim 6, wherein the valve (96) is responsive to a condition within a main lubricant system (82).

8. The gas turbine engine (20) or lubrication system (82) as recited in claim 6 or 7, wherein the reservoir (110, 112) includes a first reservoir (110) disposed between the auxiliary pump (102) and the valve (96) and a second reservoir (112) disposed between the valve (96) and the journal bearings (72) or bearing passage (80).

9. The gas turbine engine (20 or lubrication system (82) as recited in any preceding claim, wherein the reservoir (110, 112) comprises a volume determined to hold a quantity of lubricant required for operation of the geared architecture or gear system (48) for a desired time.

10. A fan drive gear system (48) comprising:
a sun gear (66) providing a driving input;
a plurality of intermediate gears (68) driven by the sun gear (66);
a ring gear (70) intermeshed with the intermediate gears (68);
a main lubrication system (82) including a main pump (92) receiving lubricant from a main tank (90); and
an auxiliary lubrication system (86) including:
a collection channel (78) disposed at least partially about the fan drive gear system (48) for collecting expelled lubricant;
an auxiliary pump (102) including an inlet (104) receiving lubricant from the collection channel (78) and an outlet (106) in communication with an auxiliary passage (108);
a bearing passage (80) in communication with the auxiliary passage (108) for communicating lubricant to a bearing (72); and **characterized by**
a reservoir (110, 112) disposed within the auxiliary passage (108) after the outlet (106) of the auxiliary pump (102) and before the bearing passage (80) for storing lubricant, wherein the reservoir (110,112) comprises a volume over a fixed length greater than a volume of the auxiliary passage (108) over a length equal to that of the reservoir (110,112).

11. The fan drive gear system (48) as recited in claim 10, including a journal bearing (72) supporting rotation of each of the plurality of intermediate gears (68), and the bearing passage (80) is in communication with each of the journal bearings (72).

12. The fan drive gear system (48) as recited in claim 11, including a valve (96) for directing lubricant between the bearing passage (80) and a main supply (90) responsive to a condition within main lubrication system (84).

13. The fan drive gear system (48) as recited in claim 12, wherein the reservoir (110, 112) includes a first reservoir (110) disposed between the auxiliary pump (102) and the valve (96) and a second reservoir (112) disposed between the valve (96) and the journal bearings (72).

14. The fan drive gear system (48) as recited in any of claims 10 to 13, including a bypass (100) in communication with the collection channel (78).

15. The fan drive gear system (48) as recited in any of claims 10 to 14, wherein the reservoir (78) comprises a volume determined to hold a quantity of lubricant required for operation of the fan drive gear system (48) for a desired time.

## Patentansprüche

1. Schmiersystem (82) für ein Getriebesystem (48), umfassend:
einen Einlassdurchgang (98);
eine Hauptpumpe (92), die Schmiermittel von einem Haupttank (90) aufnimmt;
eine Hilfspumpe (102), die einen Einlass (104), der Schmiermittel aus dem Einlassdurchgang (98) aufnimmt, und einen Auslass (106) in Verbindung mit einem Hilfsdurchgang (108) umfasst;
einen Lagerdurchgang (80) in Verbindung mit dem Hilfsdurchgang (108) für das Kommunizieren des Schmiermittels in ein Lager (72) des Getriebesystems (48); und **gekennzeichnet durch** einen Behälter (110, 112), der innerhalb des Hilfsdurchgangs (108) nach dem Auslass (106) der Hilfspumpe (102) und vor dem Lagerdurchgang (80) angeordnet ist, wobei der Behälter (110, 112) ein Volumen über einer festgelegten Länge umfasst, das größer als ein Volumen des Hilfsdurchgangs (108) über eine Länge entsprechend jener des Behälters (110, 112) ist.

2. Schmiersystem (82) nach Anspruch 1, das einen Bypass (100) in Verbindung mit dem Einlassdurchgang (98) umfasst, wobei der Bypass (100) eine Vielzahl von Öffnungen (122) für das Ablassen des Schmiermittels umfasst.

3. Schmiersystem (82) nach Anspruch 1 oder 2, wobei das Getriebesystem ein Getriebesystem mit Lüfterantrieb (48) umfasst.

4. Gasturbinentriebwerk (20), umfassend:
einen Lüfter (22), der eine Vielzahl von Lüfterschaufeln (42) umfasst, die sich um eine Achse (A) drehen können;
einen Kompressorabschnitt (24);
eine Brennkammer (26) in Fluidverbindung mit dem Kompressorabschnitt (24);
einen Turbinenabschnitt (28) in Fluidverbindung mit der Brennkammer (26);
eine Getriebearchitektur (48), die durch den Turbinenabschnitt (28) zum Drehen des Lüfters (22) um die Achse (A) angetrieben wird; und
ein Schmiermittelzufuhrsystem (82) zum Zuführen des Schmiermittels, das Folgendes umfasst:
eine Hauptpumpe (92), die Schmiermittel aus einem Haupttank (90) aufnimmt;
eine Hilfspumpe (102), die einen Einlass (104), der aus der Getriebearchitektur (48) ausgestoßenes Schmiermittel aufnimmt,
und einen Auslass (106) in Verbindung mit einem Hilfsdurchgang (108) umfasst;
einen Lagerdurchgang (80) in Verbindung mit dem Hilfsdurchgang (108) für das Kommunizieren des Schmiermittels zu einem Zapfenlager (72), **gekennzeichnet durch**:
einen Behälter (110, 112), der innerhalb des Hilfsdurchgangs (108) nach dem Auslass (106) der Hilfspumpe (102) und vor dem Lagerdurchgang (80) angeordnet ist, wobei der Behälter (110, 112) ein Volumen über eine festgelegte Länge umfasst, das größer als ein Volumen des Hilfsdurchgangs (108) über eine Länge entsprechend jener des Behälters (110, 112) ist.

5. Gasturbinentriebwerk (20) oder Schmiersystem (82) nach einem der vorangehenden Ansprüche, das einen Sammelkanal (78) umfasst, der um die Getriebearchitektur oder das Getriebesystem (48) mit dem Einlass der Hilfspumpe (102) oder dem Einlassdurchgang (98) in Verbindung mit dem Sammelkanal (78) angeordnet ist.

6. Gasturbinentriebwerk (20) oder Schmiersystem (82) nach einem der vorangehenden Ansprüche, das ein Ventil (96) für das Leiten des Schmiermittels zwischen dem Lagerdurchgang (80) und einer Schmiermittelzufuhr oder einer Hauptschmiermittelzufuhr umfasst.

7. Gasturbinentriebwerk (20) oder Schmiersystem (82) nach Anspruch 6, wobei das Ventil (96) auf eine Bedingung innerhalb eines Hauptschmiermittelsystems (82) reagiert.

8. Gasturbinentriebwerk (20) oder Schmiersystem (82) nach Anspruch 6 oder 7, wobei der Behälter (110, 112) einen ersten Behälter (110), der zwischen der Hilfspumpe (102) und dem Ventil (96) angeordnet ist, und einen zweiten Behälter (112), der zwischen dem Ventil (96) und den Zapfenlagern (72) oder dem Lagerdurchgang (80) angeordnet ist, umfasst.

9. Gasturbinentriebwerk (20) oder Schmiersystem (82) nach einem der vorangehenden Ansprüche, wobei der Behälter (110, 112) ein Volumen umfasst, das dazu bestimmt ist, eine Menge an Schmiermittel zu fassen, das für den Betrieb der Getriebearchitektur oder des Getriebesystems (48) für eine gewünschte Zeit erforderlich ist.

10. Getriebesystem mit Lüfterantrieb (48), umfassend:
ein Sonnenrad (66), das einen Treibereinlass bereitstellt;
eine Vielzahl von Zwischengetrieben (68), die durch das Sonnenrad (66) angetrieben werden;
ein Ringgetriebe (70), das mit den Zwischengetrieben (68) verzahnt ist;
einem Hauptschmiersystem (82), das eine Hauptpumpe (92) umfasst, die Schmiermittel aus einem Haupttank (90) aufnimmt; und
ein Hilfsschmiersystem (86), das Folgendes umfasst:
einen Sammelkanal (78), der mindestens teilweise um das Getriebesystem mit Lüfterantrieb (48) zum Auffangen des ausgestoßenen Schmiermittels angeordnet ist;
eine Hilfspumpe (102), die einen Einlass (104), der ein Schmiermittel aus dem Sammelkanal (78) aufnimmt, und einen Auslass (106) in Verbindung mit einem Hilfsdurchgang (108) umfasst;
einen Lagerdurchgang (80) in Verbindung mit dem Hilfsdurchgang (108) für das Kommunizieren des Schmiermittels zu einem Lager (72); und **gekennzeichnet durch**
einen Behälter (110, 112), der innerhalb des Hilfsdurchgangs (108) nach dem Auslass (106) der Hilfspumpe (102) und vor dem Lagerdurchgang (80) zum Lagern des Schmierstoffs angeordnet ist, wobei der Behälter (110, 112) ein Volumen über eine festgelegte Länge umfasst, das größer als ein Volumen des Hilfsdurchgangs (108) über eine Länge entsprechend jener des Behälters (110, 112) ist.

11. Getriebesystem mit Lüfterantrieb (48) nach Anspruch 10, das ein Zapfenlager (72) umfasst, das die Drehung jeder der Vielzahl von Zwischengetrieben (68) unterstützt, wobei der Lagerdurchgang (80) in Verbindung mit jedem der Zapfenlager (72) steht.

12. Getriebesystem mit Lüfterantrieb (48) nach Anspruch 11, das ein Ventil (96) für das Leiten des Schmiermittels zwischen dem Lagerdurchgang (80) und der Hauptzufuhr (90) umfasst, die auf eine Bedingung innerhalb des Hauptschmiersystems (84) reagiert.

13. Getriebesystem mit Lüfterantrieb (48) nach Anspruch 12, wobei der Behälter (110, 112) einen ersten Behälter (110), der zwischen der Hilfspumpe (102) und dem Ventil (96) angeordnet ist, und einen zweiten Behälter (112), der zwischen dem Ventil (96) und den Zapfenlagern (72) angeordnet ist, umfasst.

14. Getriebesystem mit Lüfterantrieb (48) nach einem der Ansprüche 10 bis 13, das einen Bypass (100) in Verbindung mit dem Sammelkanal (78) umfasst.

15. Getriebesystem mit Lüfterantrieb (48) nach einem der Ansprüche 10 bis 14, wobei der Behälter (78) ein Volumen umfasst, das dazu bestimmt ist, eine Menge an Schmiermittel zu fassen, das für den Betrieb des Getriebesystems mit Lüfterantrieb (48) für eine gewünschte Zeit erforderlich ist.

## Revendications

1. Système de lubrification (82) pour un système d'engrenage (48) comprenant :
un passage d'entrée (98) ;
une pompe principale (92) recevant un lubrifiant d'une cuve principale (90) ;
une pompe auxiliaire (102) comprenant une entrée (104) recevant un lubrifiant du passage d'entrée (98) et une sortie (106) en communication avec un passage auxiliaire (108) ;
un passage de palier (80) en communication avec le passage auxiliaire (108) pour la communication de lubrifiant à un palier (72) du système d'engrenage (48) ; et **caractérisé par** un réservoir (110, 112) disposé à l'intérieur du passage auxiliaire (108) après la sortie (106) de la pompe auxiliaire (102) et avant le passage de palier (80), dans lequel le réservoir (110, 112) comprend un volume sur une longueur fixe supérieur à un volume du passage auxiliaire (108) sur une longueur égale à celle du réservoir (110, 112).

2. Système de lubrification (82) selon la revendication 1, comprenant une dérivation (100) en communication avec le passage d'entrée (98), la dérivation (100) comprenant une pluralité d'ouvertures (122) pour le drainage de lubrifiant.

3. Système de lubrification (82) selon la revendication 1 ou 2, dans lequel le système d'engrenage comprend un système d'engrenage d'entraînement de soufflante (48).

4. Moteur à turbine à gaz (20) comprenant :
une soufflante (22) comprenant une pluralité d'aubes de soufflante (42) pouvant tourner autour d'un axe (A) ;
une section compresseur (24) ;
une chambre de combustion (26) en communication fluidique avec la section compresseur (24) ;
une section turbine (28) en communication fluidique avec la chambre de combustion (26) ;
une architecture à engrenage (48) entraînée par la section turbine (28) pour la rotation de la soufflante (22) autour de l'axe (A) ; et
un système d'alimentation en lubrifiant (82) pour la fourniture de lubrifiant comprenant :
une pompe principale (92) recevant un lubrifiant d'une cuve principale (90) ;
une pompe auxiliaire (102) comprenant une entrée (104) recevant le lubrifiant expulsé de l'architecture à engrenage (48) et une sortie (106) en communication avec un passage auxiliaire (108) ;
un passage de palier (80) en communication avec le passage auxiliaire (108) pour la communication de lubrifiant à un palier lisse (72) **caractérisé par**
un réservoir (110, 112) disposé à l'intérieur du passage auxiliaire (108) après la sortie (106) de la pompe auxiliaire (102) et avant le passage de palier (80), dans lequel le réservoir (110, 112) comprend un volume sur une longueur fixe supérieur à un volume du passage auxiliaire (108) sur une longueur égale à celle du réservoir (110, 112).

5. Moteur à turbine à gaz (20) ou système de lubrification (82) selon une quelconque revendication précédente, comprenant un canal de collecte (78) disposé autour de l'architecture à engrenage ou système d'engrenage (48) avec l'entrée de la pompe auxiliaire (102) ou le passage d'entrée (98) en communication avec le canal de collecte (78).

6. Moteur à turbine à gaz (20) ou système de lubrification (82) selon une quelconque revendication précédente, comprenant une soupape (96) pour la direction de lubrifiant entre le passage de palier (80) et une alimentation en lubrifiant ou une alimentation en lubrifiant principale.

7. Moteur à turbine à gaz (20) ou système de lubrification (82) selon la revendication 6, dans lequel la soupape (96) est sensible à une condition à l'intérieur d'un système de lubrifiant principal (82).

8. Moteur à turbine à gaz (20) ou système de lubrification (82) selon la revendication 6 ou 7, dans lequel le réservoir (110, 112) comprend un premier réservoir (110) disposé entre la pompe auxiliaire (102) et la soupape (96) et un deuxième réservoir (112) disposé entre la soupape (96) et les paliers lisses (72) ou passage de palier (80).

9. Moteur à turbine à gaz (20) ou système de lubrification (82) selon une quelconque revendication précédente, dans lequel le réservoir (110, 112) comprend un volume déterminé pour retenir une quantité de lubrifiant requise pour le fonctionnement de l'architecture à engrenage ou système d'engrenage (48) pendant une durée souhaitée.

10. Système d'engrenage d'entraînement de soufflante (48) comprenant :
un planétaire (66) fournissant une entrée d'entraînement ;
une pluralité d'engrenages intermédiaires (68) entraînés par le planétaire (66) ;
une couronne dentée (70) s'engrenant avec les engrenages intermédiaires (68) ;
un système de lubrification principal (82) comprenant une pompe principale (92) recevant un lubrifiant d'une cuve principale (90) ; et
un système de lubrification auxiliaire (86) comprenant :
un canal de collecte (78) disposé au moins partiellement autour du système d'engrenage d'entraînement de soufflante (48) pour la collecte de lubrifiant expulsé ;
une pompe auxiliaire (102) comprenant une entrée (104) recevant un lubrifiant du canal de collecte (78) et une sortie (106) en communication avec un passage auxiliaire (108) ;
un passage de palier (80) en communication avec le passage auxiliaire (108) pour la communication de lubrifiant à un palier (72) ; et **caractérisé par**
un réservoir (110, 112) disposé à l'intérieur du passage auxiliaire (108) après la sortie (106) de la pompe auxiliaire (102) et avant le passage de palier (80) pour le stockage de lubrifiant, dans lequel le réservoir (110, 112) comprend un volume sur une longueur fixe supérieur à un volume du passage auxiliaire (108) sur une longueur égale à celle du réservoir (110, 112).

11. Système d'engrenage d'entraînement de soufflante (48) selon la revendication 10, comprenant un palier lisse (72) supportant la rotation de chacun de la pluralité d'engrenages intermédiaires (68), et le passage de palier (80) est en communication avec chacun des paliers lisses (72).

12. Système d'engrenage d'entraînement de soufflante (48) selon la revendication 11, comprenant une soupape (96) pour la direction de lubrifiant entre le passage de palier (80) et une alimentation principale (90) sensible à une condition à l'intérieur du système de lubrification principal (84).

13. Système d'engrenage d'entraînement de soufflante (48) selon la revendication 12, dans lequel le réservoir (110, 112) comprend un premier réservoir (110) disposé entre la pompe auxiliaire (102) et la soupape (96) et un deuxième réservoir (112) disposé entre la soupape (96) et les paliers lisses (72).

14. Système d'engrenage d'entraînement de soufflante (48) selon l'une quelconque des revendications 10 à 13, comprenant une dérivation (100) en communication avec le canal de collecte (78).

15. Système d'engrenage d'entraînement de soufflante (48) selon l'une quelconque des revendications 10 à 14, dans lequel le réservoir (78) comprend un volume déterminé pour retenir une quantité de lubrifiant requise pour le fonctionnement du système d'engrenage d'entraînement de soufflante (48) pendant une durée souhaitée.
